**Europäisches Patentamt**

**European Patent Office**

**Office européen des brevets**

(19)

(11) Veröffentlichungsnummer : **0 163 071 B1**

(12) **EUROPÄISCHE PATENTSCHRIFT**

(45) Veröffentlichungstag der Patentschrift :
07.03.90

(21) Anmeldenummer : 85104147.5

(22) Anmeldetag : 04.04.85

(51) Int. Cl.⁵ : **C 03 B 37/012, C 03 B 37/02**

(54) Verfahren zum Herstellen einer Vorform zum Ziehen von Lichtleitfasern.

(30) Priorität : 26.05.84 DE 3419836

(43) Veröffentlichungstag der Anmeldung :
04.12.85 Patentblatt 85/49

(45) Bekanntmachung des Hinweises auf die Patenterteilung : 07.03.90 Patentblatt 90/10

(84) Benannte Vertragsstaaten :
AT CH DE FR GB IT LI NL

(56) Entgegenhaltungen :
EP--A-- 0 032 390
EP--A-- 0 100 174
DE--A-- 3 315 165
GB--A-- 2 019 383
Die Akte enthält technische Angaben, die nach dem Eingang der Anmeldung eingereicht wurden und die nicht in dieser Patentschrift enthalten sind.

(73) Patentinhaber : AEG KABEL Aktiengesellschaft
Bonnenbroicher Strasse 2-14
D-4050 Mönchengladbach 2 (DE)

(72) Erfinder : Glessner, Bertram, Dipl.-Phys.
Aachenerstrasse 25
D-4000 Düsseldorf (DE)
Erfinder : Heinen, Peter
Am Driesch 35
D-5137 Waldfeucht (DE)
Erfinder : Pitsch, Paul, Dipl.-Phys.
Heinrich-Pesch-Strasse 36
D-4050 Mönchengladbach 2 (DE)
Erfinder : Peglow, Hartmut
Grechte 3
D-4156 Willich 3 (DE)

(74) Vertreter : Langer, Karl-Heinz, Dipl.-Ing.
Licentia Patent-Verwaltungs-GmbH Theodor-Stern-Kai 1
D-6000 Frankfurt/Main 70 (DE)

**Beschreibung**

Die Erfindung betrifft ein Verfahren zum Herstellen einer Vorform zum Ziehen von Lichtleitfasern, bei dem ein rohrfömiger Glaskörper durch Dotieren des inneren Kernmaterials mit Bereichen mit unterschiedlichem Brechungsindex hergestellt wird, wobei der rohrförmige Glaskörper ganz oder teilweise kollabiert wird und das Kollabieren des rohrförmigen Glaskörpers mit einem Unterdruck im Inneren des rohrförmigen Glaskörpers erfolgt. Ein solches Verfahren ist aus der EP-A1-0100174 bekannt.

Optisch leitende Glasfasern werden aus Vorformen gezogen. Nach dem CVD-Verfahren wird ein aus Mantelglas bestehendes Rohr innenseitig mit Kernglas beschichtet. Das Kernglas besteht insbesondere aus mit Germaniumdioxyd ($GeO_2$) dotiertem Siliciumdioxyd ($SiO_2$) und weist einen höheren Brechungsindex auf als das Mantelglas. Man kann nach dem CVD-Verfahren auch einen stabförmigen Grundkörper zunächst mit dotiertem Kernglas und danach mit einem Mantelglas beschichten. Der Grundkörper wird schließlich entfernt. In beiden Fällen erhält man, ggfs. nach einer Verglasung der aufgebrachten Schichten, einen rohrförmigen Körper, welcher vor dem Faserziehen kollabiert werden muß. Dabei wird der rohrförmige Körper, von einem Ende beginnend, fortlaufend über seine Länge hin bis zum Erweichungspunkt erhitzt, so daß er zu einem Vollkörper zusammenfällt. Das Kollabieren kann als getrennter Verfahrensschritt oder gemeinsam mit dem Faserziehen erfolgen.

Insbesondere bei mit $GeO_2$ dotiertem Kernglas wurde in dessen zentralem Bereich ein nachteiliger Einbruch (Dip) des Brechungsindexes festgestellt. Dieser entsteht dadurch, daß bei der zur Kollabierung erforderlichen hohen Erhitzung verhältnismäßig viel $GeO_2$ aus der inneren Rohroberfläche verdampft. Infolgedessen entsteht ein zentraler Bereich des kollabierten Kern mit einer Verarmung an $GeO_2$. Ein solcher an der Vorform entstandener Dip ergibt sich dann in geometrisch äquivalenter Form auch in der gezogenen optischen Faser.

Dieser unerwünschte Dip verursacht, je nach Größe, in Multimodegradienten- und Monomodefasern nachteilige, physikalische Effekte :
Reduzierung der Einkoppeleffektivität,
Erhöhung der Mikrokrümmungsempfindlichkeit,
Beeinflussung der Cut-Off-Wellenlänge,
Reduzierung der Übertragungsbandbreite,
Fehlinterpretation der DMD-Meßmethode,
negative Beeinflussung des γ-Faktors bei großen LWL-Strecken,
Empfindlichkeit der Bandbreitenmessung bezüglich Einkopplung und Microbendings.

Trotz zahlreicher Versuche ist es bisher nicht gelungen, den Dip vollständig zu vermeiden, man konnte ihn lediglich reduzieren. Um solch kleine Dip-Werte zu erreichen, mußte der zunächst große Innendurchmesser des beschichteten Rohres durch Vorkollabierung verkleinert werden. Nach der Verkleinerung wurde die $GeO_2$-verarmte innere Hautschicht durch Ätzen entfernt. Dieses Vorverfahren wurde bis zu einem möglichst kleinen verbleibenden Innendurchmesser durchgeführt, so daß beim abschließenden endgültigen Kollabieren ein nur relativ geringer $GeO_2$-verarmter Flächenanteil auch nur eine schmale Dip-Zone ergeben konnte. Ein weiteres bekanntes Verfahren zur Reduzierung eines Dip besteht darin, daß während des Kollabierens germaniumhaltige Stoffe zugesetzt werden, um der $GeO_2$-Verarmung entgegenzuwirken.

Aus der EP-A1-0100174 ist die Anwendung eines Unterdrucks zur mechanischen Unterstützung des Kollabierens einer Vorform bekannt. Die nach dem Außenbeschichtungsverfahren hergestellte rohrförmige Vorform wird konsolidiert, an einem Ende zugeschmolzen und evakuiert. Dann wird das andere Ende zugeschmolzen, so daß ein geschlossener evakuierter Raum entsteht. Das Schließen der Vorform infolge einer anschließenden Wärmebehandlung wird durch den Unterdruck im Rohr unterstützt. Dieses Verfahren hat den Nachteil, daß Restgase in der stabförmigen Vorform eingeschlossen sein können, die bei der Wärmebehandlung aus den Wänden des Vorformrohres abgegeben werden.

Die bekannten Verfahren zur Verminderung des Dips sind aufwendig und nicht voll befriedigend, da ein Restdip nicht vermeidbar war. Der Erfindung liegt deshalb die Aufgabe zugrunde, das Verfahren der eingangs genannten Art so zu gestalten, daß ein Dip möglichst vollständig vermieden wird.

Diese Aufgabe wird bei einem Verfahren der eingangs erwähnten Art nach der Erfindung dadurch gelöst, daß der nach dem Innenbeschichtungsverfahren hergestellte rohrförmige Glaskörper während des Kollabierens stets mit einer Vakuumpumpe verbunden bleibt, und daß der Unterdruck derart gewählt wird, daß die Vorform bzw. die aus der Vorform entstehende Glasfaser möglichst keine Verarmung an Dotiermaterial (Dip) aufweist.

Der Erfindung liegt die wesentliche Erkenntnis zugrunde, daß durch einen entsprechenden Unterdruck ein Dip vermieden werden kann. Beim Verfahren nach der Erfindung wird vorzugsweise darauf geachtet, daß der zu einem Stab kollabierte Glaskörper einen möglichst kreisförmigen Querschnitt aufweist. Dies erreicht man gemäß einer Weiterbildung der Erfindung vorzugsweise dadurch, daß der rohrförmige Glaskörper durch Vorkollabieren mechanisch so stabil gemacht wird, daß beim weiteren Kollabieren mit Unterdruck kein Glaskörper mit elliptischem Querschnitt entsteht. Zu diesem Zweck muß der rohrförmige Glaskörper vor dem Kollabieren zu einem Vollstab eine entsprechende Geometrie aufweisen, indem er beispielsweise einen entsprechend kleinen Innendurchmesser oder ein entsprechend kleines Verhältnis von Innen- zu Außendurchmesser aufweist.

Das Verfahren nach der Erfindung führt zu dem überraschenden Ergebnis, daß die Entstehung eines Dips bzw. ein Dip vollständig bzw. nahezu vollständig vermeidbar ist und somit das Ergebnis wesentlich besser ist als bei bekannten Verfahren. Der Unterdruck kann beliebig niedrige Werte annehmen, wobei jedoch in der Praxis der Druck nur soweit verringert wird, daß sich der Dip mit Sicherheit nicht ausbildet.

Ein wesentlicher Vorteil der Erfindung besteht auch darin, daß das Glasrohr bei Anwendung der Erfindung (Unterdruck) schneller kollabiert als bei bekannten Verfahren.

Dieses schnellere Kollabieren hat seinerseits wiederum den Vorteil, daß der beim Kollabieren erforderliche Wärmeprozeß, der für den Dip mit verantwortlich ist, abgekürzt werden kann.

Der erforderliche Mindestunterdruck hängt von der Art der für die Vorform verwendeten Materialien, insbesondere der Dotierstoffe ab. Für den jeweiligen Fall geeignete optimale Druckwerte können durch einfache Versuche festgestellt werden, indem beispielsweise eine Versuchsvorform über die Länge mit variablem Druck kollabiert wird. Durch Messung in verschiedenen Ebenen läßt sich feststellen, bei welchem Unterdruck der Dip verschwindet bzw. unmerklich klein wird.

Der rohrförmige Glaskörper wird beim Verfahren nach der Erfindung über seine gesamte Länge oder nur über einen Teil seiner Länge kollabiert. Das Kollabieren erfolgt derart, daß der rohrfömige Glaskörper zu einem Vollstab oder zu einem rohrförmigen Glaskörper mit kleinerem Durchmesser kollabiert.

Der rohrförmige Glaskörper wird beispielsweise an seinem einen Ende verschlossen und damit an diesem Ende vollständig kollabiert. In dem einseitig abgeschlossenen rohrförmigen Glaskörper wird dann der Unterdruck hergestellt und das Glasrohr wird darauf entweder zu einer Glasfaser ausgezogen oder vor dem Ziehen zu einem Stab kollabiert.

Gemäß einer Ausführungsform der Erfindung wird der rohrförmige Glaskörper vor dem Kollabieren mit Unterdruck ohne Unterdruck vorkollabiert. Für den Fall, daß im Glasrohr vor dem Kollabieren mit Unterdruck eine verarmte Dotierungsschicht vorhanden ist, wird diese verarmte Dotierungsschicht entfernt. Vorzugsweise wird jedoch vor dem Kollabieren mit Unterdruck das Entstehen einer verarmten Dotierungsschicht im Glasrohr verhindert.

Beim Verfahren nach der Erfindung wird der Unterdruck gegenüber dem Atmosphärendruck hergestellt. Vorzugsweise besteht beim Kollabieren mit Unterdruck dieser Unterdruck gegenüber dem auf die Außenwand des rohrförmigen Glaskörpers wirkenden Druck.

Die Erfindung ist ganz allgemein anwendbar, so daß es beispielsweise nicht darauf ankommt, ob der Bereich mit unterschiedlichem Brechungsindex durch Innen- oder Außenbeschichtung hergestellt wird.

Die Erfindung wird im folgenden an Ausführungsbeispielen erläutert.

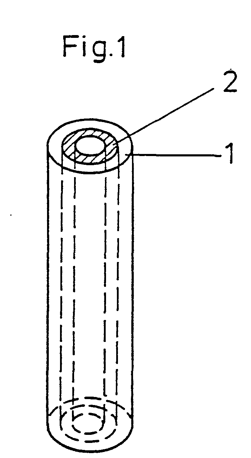

Der in Figur 1 vorhandene rohrförmige Glaskörper besteht aus einer äußeren Mantelschicht 1 aus im wesentlichen reinem $SiO_2$-Glas und einer inneren Kernschicht 2 aus im wesentlichen mit $GeO_2$ dotiertem $SiO_2$-Glas. Der $GeO_2$-Gehalt nimmt zur Mitte hin zu, so daß im Kern der zu ziehenden Glasfaser das gewünschte Gradientenprofil des Brechungsindex mit exponentiellem Verlauf entsteht.

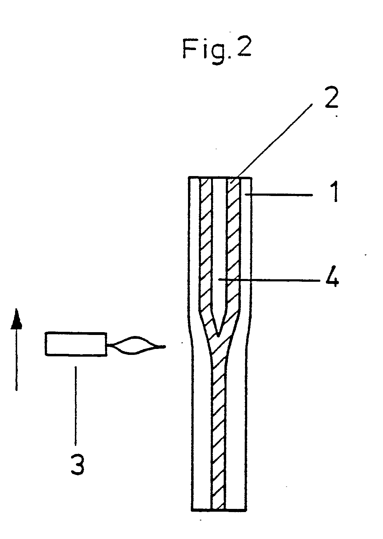

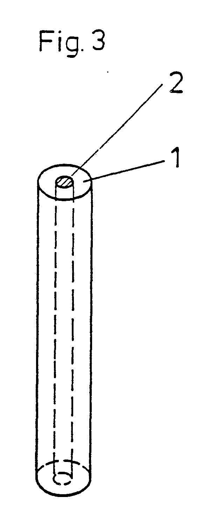

Durch einen Brenner 3 wird gemäß der Figur 2 der rohrförmige Körper bis zum Erweichungspunkt erhitzt und kollabiert an der Erhitzungszone. Der Brenner 3 wandert in Achsrichtung langsam weiter, so daß schließlich gemäß der Figur 3 eine Vorform ohne Innenbohrung (Vollstab) entsteht. Durch eine Absaugpumpe wird im Innenraum 4 des rohrförmigen Körpers der Figur 2 ein absoluter Druck von 400 mbar aufrechterhalten. Da in unseren Breitengraden im allgemeinen ein Atmosphärendruck von 1 bar herrscht, beträgt in diesem Fall der Unterdruck bzw. Differenzdruck 600 mbar. Durch einen solchen Druck im Innenraum des rohrförmigen Körpers beim Kollabieren wird die Entstehung eines Dips verhindert.

Damit der rohrförmige Körper sich nicht infolge des inneren Unterdrucks elliptisch verformt, darf dessen Wandstärke relativ zum Innendurchmesser nicht zu klein sein. Deshalb wurde vor dem endgültigen Kollabieren gemäß Figur 2 ein nach dem einen vertikalen CVD-Verfahren (VCVD) innenbeschichtetes Rohr, welches einen größeren Außendurchmesser und geringere Wandstärke aufwies, zunächst bei atmosphärischem Innendruck vorkollabiert. Die dadurch entstandene $GeO_2$-arme Schicht wurde durch Ätzen entfernt. Da bei dem nachfolgenden endgültigen Kollabieren gemäß Fig. 2 ein innerer Unterdruck von beispielsweise 400 mbar aufrechterhalten wurde, konnte sich kein $GeO_2$-verarmter innerer Bereich mehr ausbilden.

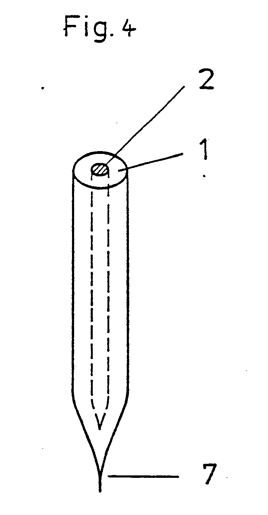

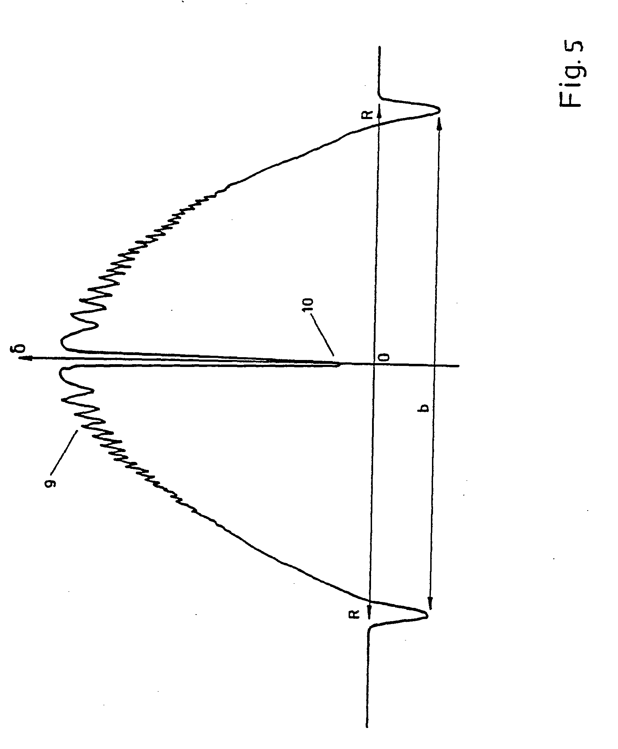

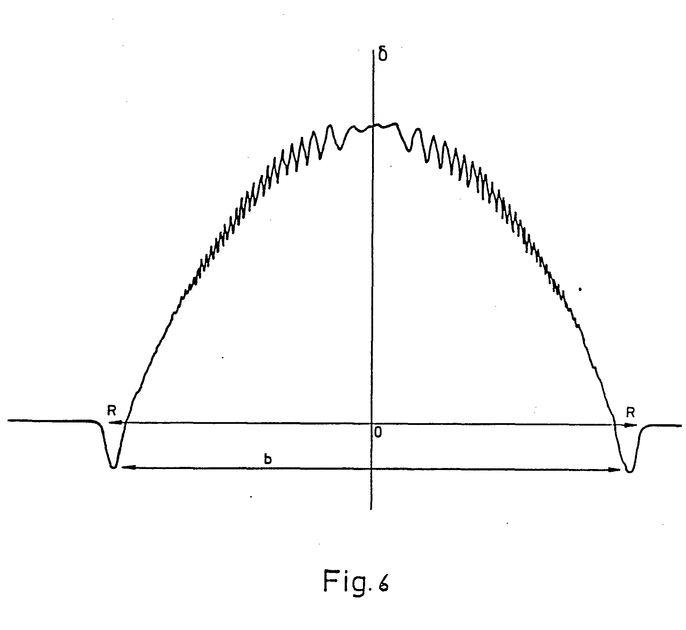

Bei Herstellung der Form mit atmospährischem Innendruck im Innenraum 4 wurde über den Querschnitt des kollabierten Kerns 2 ein Verlauf des Brechungsindex nach Fig. 4 gemessen. Über dem Radius r des Kerns mit einer Dicke b = 5,5 mm wurde in Figur 5 die Differenz δ des Brechungsindex gegenüber der Mantelschicht 1 aufgetragen. Man erkennt den für eine Gradientenfaser typischen Verlauf welcher im Idealfall exponential und glatt sowie symmetrisch zur Mittelachse verlaufen sollte, wobei das Maximum des Brechungsindex im Zentrum gemessen wird. Während die im Verlauf der Kennlinie erkennbaren kleinen Schwankungen 9, welche durch die Schichtenbildung beim CVD-Verfahren entstehen, wenig stören und in einer gezogenen Faser praktisch nicht mehr erkennbar sind, verursacht der tiefe Dip 10 eine erhebliche Reduzierung der Übertragungsbandbreite einer aus einer solchen Vorform gezogenen Lichtleitfaser.

Bei einer erfindungsgemäß mit einem inneren Unterdruck von etwa 400 mbar kollabierten Vorform ergab sich ein Verlauf des Brechungsindex nach Fig. 5. Ein Dip ist nicht mehr feststellbar, obgleich mit einem relativ zur Kerndicke b = 5,5 mm kleinen Schrittabstand von nur 5 μm gemessen wurde. An der gleichen Vorform wurde eine Röntgen-Mikroanalyse (RMA) bezüglich des GeO$_2$-Gehalts durchgeführt. Bei einem Auflösungsvermögen der Meßeinrichtung von 1 μm wurde kein Einbruch des GeO$_2$-Gehalts festgestellt. Eine aus einer solchen Vorform gezogenen Lichtleitfaser hat einen idealen Verlauf des Brechungsindexes. Diese vorteilhafte Wirkung wird mit überraschend einfachen Mitteln erreicht. Der erforderliche Unterdruck ist nicht außergewöhnlich hoch und kann mit einfachen Mitteln bewerkstelligt werden.

## Patentansprüche

1. Verfahren zum Herstellen einer Vorform zum Ziehen von Lichtleitfasern, bei dem ein rohrförmiger Glaskörper durch Dotieren des inneren Kernmaterials mit Bereichen mit unterschiedlichem Brechungsindex hergestellt wird, wobei der rohrförmige Glaskörper ganz oder teilweise kollabiert wird und das Kollabieren des rohrförmigen Glaskörpers mit einem Unterdruck im Inneren des rohrförmigen Glaskörpers erfolgt, dadurch gekennzeichnet, daß der nach dem Innenbeschichtungsverfahren hergestellte rohrförmige Glaskörper während des Kollabierens stets mit einer Vakuumpumpe verbunden bleibt, und daß der Unterdruck derart gewählt wird, daß die Vorform bzw. die aus der Vorform entstehende Glasfaser möglichst keine Verarmung an Dotiermaterial (Dip) aufweist.

2. Verfahren nach Anspruch 1, dadurch gekennzeichnet, daß derart verfahren wird, daß der zu einem Stab kollabierte Glaskörper einen möglichst kreisförmigen Querschnitt aufweist.

3. Verfahren nach Anspruch 2, dadurch gekennzeichnet, daß der rohrförmige Glaskörper durch Vorkollabieren mechanisch so stabil gemacht wird, daß beim weiteren Kollabieren mit Unterdruck kein Glaskörper mit elliptischem Querschnitt entsteht.

4. Verfahren nach einem der Ansprüche 1 bis 3, dadurch gekennzeichnet, daß der rohrförmige Glaskörper über seine gesamte Länge kollabiert wird.

5. Verfahren nach einem der Ansprüche 1 bis 4, dadurch gekennzeichnet, daß der rohrförmige Glaskörper nur über einen Teil seiner Länge kollabiert wird.

6. Verfahren nach einem der Ansprüche 1 bis 5, dadurch gekennzeichnet, daß der rohrförmige Glaskörper zu einem Vollstab kollabiert wird.

7. Verfahren nach einem der Ansprüche 1 bis 6, dadurch gekennzeichnet, daß derart verfahren wird, daß das teilweise kollabierte Glasrohr zu einer Faser mit möglichst kreisförmigem Querschnitt ausgezogen werden kann.

8. Verfahren nach einem der Ansprüche 1 bis 7, dadurch gekennzeichnet, daß der rohrförmige Glaskörper vor dem Kollabieren mit Unterdruck ohne Unterdruck vorkollabiert wird.

9. Verfahren nach einem der Ansprüche 1 bis 8, dadurch gekennzeichnet, daß für den Fall, daß im Glasrohr vor dem Kollabieren mit Unterdruck eine verarmte Dotierungsschicht vorhanden ist, diese verarmte Dotierungsschicht entfernt wird.

10. Verfahren nach einem der Ansprüche 1 bis 8, dadurch gekennzeichnet, daß vor dem Kollabieren mit Unterdruck das Entstehen einer verarmten Dotierungsschicht im Glasrohr verhindert wird.

11. Verfahren nach einem der Ansprüche 1 bis 10, dadurch gekennzeichnet, daß ein Unterdruck gegenüber dem Atmosphärendruck hergestellt wird.

12. Verfahren nach einem der Ansprüche 1 bis 11, dadurch gekennzeichnet, daß die Innenbeschichtung des Glasrohres aus dotiertem Silizium besteht.

13. Verfahren nach Anspruch 12, dadurch gekennzeichnet, daß als Dotierstoff Germaniumdioxid und/oder Phosphorpentoxid verwendet wird.

## Claims

1. Method of manufacturing a preform for drawing optical fibres, in which a tubular glass body is manufactured by doping of the inner core material with areas of varying refractive index, in which the tubular glass body is wholly or partially collapsed and the collapsing of the tubular glass body takes place with a reduced pressure inside the tubular glass body, characterised in that the tubular glass body manufactured by the inner coating method remains permanently connected to a vacuum pump during the collapsing, and that the reduced pressure is selected in such a way that the preform and the glass fibres arising out of the preform display the least possible depletion of doping material (dip).

2. Method according to claim 1, characterised in that a procedure is followed whereby the glass body collapsed to a rod is of circular cross-section as far as possible.

3. Method according to claim 2, characterised in that the tubular glass body is made so mechanically stable by pre-collapsing that a glass body of elliptical cross-section is not produced during the further collapsing with reduced pressure.

4. Method according to any one of claims 1 to 3, characterised in that the tubular glass body is collapsed over its entire length.

5. Method according to any one of claims 1 to 4, characterised in that the tubular glass body is collapsed over only part of its length.

6. Method according to any one of claims 1 to 5, characterised in that the tubular glass body is collapsed to a solid rod.

7. Method according to any one of claims 1 to 6, characterised in that a procedure is followed whereby the partially collapsed glass tube can be drawn out into a fibre of circular cross-section as far as possible.

8. Method according to any one of claims 1 to 7, characterised in that the tubular glass body is pre-collapsed without reduced pressure prior to the collapsing with reduced pressure.

9. Method according to any one of claims 1 to 8, characterised in that in the event of a depleted doping layer existing in the glass tube prior to the collapsing with reduced pressure, this depleted doping layer is removed.

10. Method according to any one of claims 1 to 8, characterised in that prior to the collapsing with reduced pressure the emergence of a depleted doping layer in the glass tube is prevented.

11. Method according to any one of claims 1 to 10, characterised in that a reduced pressure compared with atmospheric pressure is created.

12. Method according to any one of claims 1 to 11, characterised in that the inner coating of the glass tube consists of doped silicon.

13. Method according to claim 12, characterised in that germanium dioxide and/or phosphorus pentoxide is used as doping material.

**Revendications**

1. Procédé de fabrication d'une préforme pour l'étirage de fibres optiques, dans lequel on fabrique un corps tubulaire de verre en dopant la couche-noyau intérieure qui présente des zones d'indice de réfraction différent, puis on écrase sur lui-même, totalement ou partiellement, ce corps tubulaire de verre, cet écrasement sur lui-même du corps tubulaire de verre se faisant avec une dépression à l'intérieur du corps tubulaire de verre, caractérisé pendant l'opération d'écrasement sur lui-même, le corps tubulaire de verre, fabriqué selon le procédé de revêtement intérieur, reste en permanence relié à une pompe à vide ; et en ce que l'on choisit la dépression de façon que la préforme ou la fibre de verre fabriquée à partir de la préforme ne présente, le plus possible, aucun appauvrissement en matériau dopant (dip/chute).

2. Procédé selon la revendication 1, caractérisé en ce que l'on procède de façon que le corps de verre, écrasé sur lui-même pour devenir un barreau, présente une section le plus possible circulaire.

3. Procédé selon la revendication 2, caractérisé en ce que, par préécrasement sur lui-même, on rend mécaniquement le corps tubulaire de verre suffisamment rigide pour que la poursuite de l'écrasement sur lui-même sous dépression ne fasse pas apparaître un corps de verre de section elliptique.

4. Procédé selon l'une des revendications 1 à 3, caractérisé en ce que l'on écrase sur lui-même le corps tubulaire de verre sur toute sa longueur.

5. Procédé selon l'une des revendications 1 à 4, caractérisé en ce que l'on n'écrase le corps tubulaire de verre sur lui-même que sur une partie de sa longueur.

6. Procédé selon l'une des revendications 1 à 5, caractérisé en ce que l'on écrase sur lui-même le corps tubulaire de verre pour obtenir un barreau plein.

7. Procédé selon l'une des revendications 1 à 6, caractérisé en ce que l'on procède de façon à pouvoir étirer le corps de verre, partiellement écrasé sur lui-même, pour obtenir une fibre de section le plus possible circulaire.

8. Procédé selon l'une des revendications 1 à 7, caractérisé en ce qu'avant écrasement sur lui-même sous dépression, on procède à un préécrasement du corps tubulaire de verre sans dépression.

9. Procédé selon l'une des revendications 1 à 8, caractérisé en ce que dans le cas où il existe dans le tube de verre, avant écrasement sur lui-même sous dépression, une couche appauvrie en produit dopant, on enlève cette couche appauvrie en produit dopant.

10. Procédé selon l'une des revendications 1 à 8, caractérisé en ce qu'avant l'écrasement du tube sur lui-même sous dépression, on interdit l'apparition d'une couche appauvrie en produit dopant dans le tube de verre.

11. Procédé selon l'une des revendications 1 à 10, caractérisé en ce que l'on produit une dépression par rapport à la pression atmosphérique.

12. Procédé selon l'une des revendications 1 à 11, caractérisé en ce que le revêtement intérieur du tube de verre est constitué de silicium dopé.

13. Procédé selon la revendication 12, caractérisé en ce que comme produit dopant on emploie du dioxyde de germanium et/ou du pentoxyde de phosphore.

# Fig.1

# Fig.2

# Fig. 3

3

Fig. 4

Fig. 5

Fig. 6